# EUROPEAN PATENT APPLICATION

(11) **EP 2 533 571 A1**
(43) Date of publication of application: **12.12.2012**
(21) Application number: 11360022.5
(22) Date of filing: 06.06.2011
(51) Int. Cl.: H04W 36/04, H04W 48/16, H04W 84/04, H04W 36/00

(54) **Handover control**

(71) Applicant: Alcatel Lucent, 75007 Paris (FR)
(72) Inventor: Sapiano, Philip Charles, Corsham Wiltshire SN13 9AY (GB); Putman, Tony, Chippenham Wiltshire SN15 5AQ (GB)
(74) Representative: Script IP Limited

(57) **Abstract**

A method of identifying target cells with which to initiate handover, a computer program product and a network node are disclosed. The method comprises the steps of: receiving timing offset information indicative of a timing offset between frames transmitted by different cells; and in response to a message having information relating to a detected target cell, the message having a detected timing offset between frames transmitted by a source cell and frames transmitted by the detected target cell, identifying as candidate target cells with which to initiate handover any cells having a timing offset indicated by the timing offset information which is within a range bounded by the detected timing offset. Using this approach, it is possible to narrow down the candidate target cells by using timing offset information which is already reported in pre-existing messages and comparing this with timing offset information which has been collected and stored previously. Such an approach enables a significant narrowing of the candidate target cells to be performed by legacy equipment without needing to adopt updated standards which would otherwise require additional information to be included in such messages.

## Description

### FIELD OF THE INVENTION

The present invention relates to a method of identifying target cells with which to initiate handover, a computer program product and a network node.

Techniques for handover control are known. In a cellular telecommunications system, radio coverage is provided by areas known as cells. A base station is located in each cell to provide the radio coverage. Traditional base stations provide coverage in relatively large geographical areas and cells are often referred to as macrocells. It is possible to provide smaller sized cells within a macrocell. Such smaller sized cells are sometimes referred to as small cells, microcells, picocells, femtocells, homecells or metrocells. One way to establish a small cell is to provide a small cell base station that provides coverage having a relatively limited range within the coverage area of, for example, a macrocell. The transmission power of a small cell base station is relatively low and, hence, each small cell provides a small coverage area compared to that of a macrocell and covers, for example, an office or a home.

Such small cells are typically provided where the communications coverage provided by the macrocell is poor or where a user wishes to use an alternative communication link provided locally, by the small cell base station, to communicate with the core network. Such a situation might arise where, for example, a user has a pre-existing communication link and the user wishes to utilise that link in preference to that provided by a macrocell network provider to communicate with the core network. In addition to user-provided small cells, network operators may require to deploy open access small cells or metro cells which need to be integrated with the network operator's macro network. Some of these deployments are intra-frequency and soft handover may be required to maintain good system performance.

To enable user equipment to communicate with small cell base stations, it is therefore necessary to handover the user equipment from the macrocell from within which it is located to a small cell base station. However, tens of thousands of small cell base stations may typically be deployed within a network under one controller and there will be much primary scrambling code (PSC) reuse between small cells. This presents a problem of identifying which small cell base station to hand over to due to the PSC ambiguity.

Accordingly, it is desired to provide an improved technique for handover control.

### SUMMARY

According to a first aspect, there is provided a method of identifying target cells with which to initiate handover, the method comprising the steps of: receiving timing offset information indicative of a timing offset between frames transmitted by different cells; and in response to a message having information relating to a detected target cell, the message having a detected timing offset between frames transmitted by a source cell and frames transmitted by the detected target cell, identifying as candidate target cells with which to initiate handover any cells having a timing offset indicated by the timing offset information which is within a range bounded by the detected timing offset.

The first aspect recognises that a problem with existing approaches is that it is not always possible to determine from currently reported information in, for example, a Radio Network Subsystem Application Part Radio Link (RNSAP RL) set up/addition message transmitted over an lur interface which cell is the correct candidate target for handover in, for example, a small cell deployment. This is because the identifier in that message is often insufficient to uniquely identify the candidate target cell, particularly where even moderate numbers of such small cells have been deployed. It will be appreciated that the lur interface is used for transmission of signals between Radio Network Controllers (RNCs) or between an RNC and a gateway such as a small cell gateway.

Accordingly, timing offset information which indicates timing offsets between frames transmitted by different cells may be received. A message may be received having information related to a detected target cell. The message may have an indication of a timing offset between frames transmitted by a source cell and frames transmitted by the detected target cell. Candidate target cells may then be identified as being those cells which have a timing of set indicated by the timing offset information which is within a range bounded at one end by the indicated timing offset. Using this approach, it is possible to narrow down the candidate target cells by using timing offset information which is already reported in pre-existing messages and comparing this with timing offset information which has been collected and stored previously. Such an approach enables a significant narrowing of the candidate target cells to be performed by legacy equipment without needing to adopt updated standards which would otherwise require additional information to be included in such messages.

In one embodiment, the range is also bounded by the detected timing offset in combination with a default timing offset. By looking for matches within the range bounded by the indicated timing offset and a default timing offset such as, for example, DOFF as defined in 3GPP TS25.402, the range of target candidates will typically be narrowed down to approximately 3.1 % (88 ms / 2,560 ms) of the number of target candidates that would otherwise need to be considered.

In one embodiment, the step of identifying comprises identifying as candidate target cells any cells indicated by the timing offset information as having a timing offset which is greater than or equal to the detected timing offset, but equal to or less than the detected timing offset in addition to the default timing offset. Hence, the indicated timing offset may represent the lower boundary of the range, whereas the upper boundary of the range may be indicated by the sum of the indicated timing offset and the default timing offset.

In one embodiment, the step of identifying comprises identifying as candidate target cells any cells having a timing offset indicated by the timing offset information which matches the detected timing offset.

In one embodiment, the timing offset information comprises cell identifiers associated with each timing offset, the message includes a detected target cell identifier and the method comprises the step of disregarding any candidate target cells not sharing the detected target cell identifier. Accordingly, each timing offset of the timing offset information may be associated with cell identifiers which identify the cells between which the timing offset occurs. Such a timing offset may be, for example, an system frame number (SFN) to SFN timing offset. The message may include a detected target cell identifier and any candidate target cells which do not have that detected target cell identifier may then be disregarded. It will be appreciated that this helps to further narrow down the search. Alternatively, only timing offset information indicated as being associated with the detected target cell may be used when trying to identify potential matches.

In one embodiment, the detected target cell identifier comprises an indication of a primary scrambling code of the target cell. It will be appreciated that such a primary scrambling code will already be reported in pre-existing messages reported over the lur interface.

In one embodiment, the timing offset information comprises cell identifiers associated with each timing offset, the message includes an indication of said source cell and the step of identifying comprises utilising only timing offset information indicated as being associated with the source cell. Accordingly, the message may include a source cell identifier and only timing offset information indicated as being associated with the source cell may be used when trying to identify potential matches. Alternatively, it will be appreciated that any candidate target cells whose matching timing offset is not associated with the source cell may be disregarded.

In one embodiment, the source cell identifier comprises at least one of an indication of a primary scrambling code of the source cell and an indication of a cell identifier of the source cell. Accordingly, the message may be provided with one or more of a primary scrambling code of the source cell and an indication of the cell identifier of that source cell.

In one embodiment, the method comprises the steps of maintaining a neighbour list identifying neighbouring cells to each source cell and the step of identifying comprises utilising only timing offset information indicated as being associated with the source cell and its neighbouring cells. Accordingly, a neighbour list identifying neighbouring cells to the source cell may be maintained. It will be appreciated that such a neighbour list may be assembled in a variety of ways such as from the timing offset information itself and/or augmented by additional information available to the network. This neighbour list may be then utilised so that only timing of the information associated with the source cell and its neighbouring cells may be used when trying to identify candidate target cells.

In one embodiment, the step of disregarding comprises disregarding any candidate target cells whose timing offset when combined with a timing offset associated with the source cell fails to fall within the range bounded by the detected timing offset.

In one embodiment, the step of disregarding comprises disregarding any candidate target cells whose timing offset when combined with a timing offset associated with the source cell and the neighbouring cell fails to fall within the range bounded by the detected timing offset. Accordingly, the combined timing offset of the source cell and the timing offset of the candidate target cell within a neighbouring cell is examined to see whether it falls within the range bounded by the indicated timing offset and any which fail to do so may be disregarded.

In one embodiment, the method comprises the step of configuring the candidate target cells to attempt uplink synchronisation with user equipment associated with the message and disregarding any candidate target cells unable to establish the uplink synchronisation. Accordingly, uplink synchronisation may then be attempted by the candidate target cells. Any candidate target cells which are unable to establish the uplink synchronisation with the user equipment associated with the message may then be disregarded. Again, this helps to reduce the number of candidate target cells.

According to a second aspect, there is provided a computer program product operable, when executed on a computer, to perform the method steps of the first aspect.

According to a third aspect, there is provided a network node operable to identify target cells with which to initiate handover, the network node comprising: timing logic operable to receive timing offset information indicative of a timing offset between frames transmitted by different cells; and identification logic operable, in response to a message having information relating to a detected target cell, the message having a detected timing offset between frames transmitted by a source cell and frames transmitted by the detected target cell, to identify as candidate target cells with which to initiate handover any cells having a timing offset indicated by the timing offset information which is within a range bounded by the detected timing offset.

In one embodiment, the range is also bounded by the detected timing offset in combination with a default timing offset.

In one embodiment, the identification logic is operable to identify as candidate target cells any cells indicated by the timing offset information as having a timing offset which is greater than or equal to the detected timing offset, but equal to or less than the detected timing offset in addition to the default timing offset.

In one embodiment, the identification logic is operable to identify as candidate target cells any cells having a timing offset indicated by the timing offset information which matches the detected timing offset.

In one embodiment, the timing offset information comprises cell identifiers associated with each timing offset, the message includes a target cell identifier and the identification logic is operable to disregard any candidate target cells not sharing the target cell identifier.

In one embodiment, the target cell identifier comprises an indication of a primary scrambling code of the target cell.

In one embodiment, the timing offset information comprises cell identifiers associated with each timing offset, the message includes an indication of said source cell and the identification logic is operable to utilise only timing offset information indicated as being associated with the source cell.

In one embodiment, the source cell identifier comprises at least one of an indication of a primary scrambling code of the source cell and an indication of a cell identifier of the source cell.

In one embodiment, the timing logic is operable to maintain a neighbour list identifying neighbouring cells to each source cell and the identification logic is operable to utilise timing offset information indicated as being associated with the source cell and its neighbouring cells.

In one embodiment, the identification logic is operable to disregard any candidate target cells whose timing offset when combined with a timing offset associated with the source cell fails to fall within the range bounded by the detected timing offset.

In one embodiment, the identification logic is operable to disregard any candidate target cells whose timing offset when combined with a timing offset associated with the source cell and the neighbouring cell fails to fall within the range bounded by the detected timing offset.

In one embodiment, the network node comprises configuring logic operable to configure the candidate target cells to attempt uplink synchronisation with user equipment associated with the message and the identification logic is operable to disregard any candidate target cells unable to establish the uplink synchronisation.

In one embodiment, the network node comprises one of a small cell gateway and a radio network controller.

In one embodiment, each timing offset of the timing offset information comprises an SFN to connection frame number (CFN) observed time difference or an SFN to SFN observed time difference. Further information can found in 3GPP TS25.215.

In one embodiment, the detected timing of set is a frame offset and chip offset sent via RNSAP. Further information can found in 3GPP TS25.423/402.

In one embodiment, the default timing off set is DOFF. Further information can found in 3GPP TS25.402 and TS25.331.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates an example deployment of a wireless network according to one embodiment;
Figure 2 illustrates example primary scrambling code provisioning;
Figure 3 illustrates an example SFN-SFN timing arrangement for base stations for a subset of base stations shown in Figure 4;
Figure 4 illustrates the subset of base stations;
Figures 5A and 5B show an overview of messaging between user equipment and network nodes when establishing a radio connection and then performing soft handover;
Figure 6 illustrate example uplink synchronisation;
Figures 7A and 7B show proposed future standards updates; and
Figure 8 shows an example technique for encoding information into a cell ID.

### DESCRIPTION OF THE EMBODIMENTS

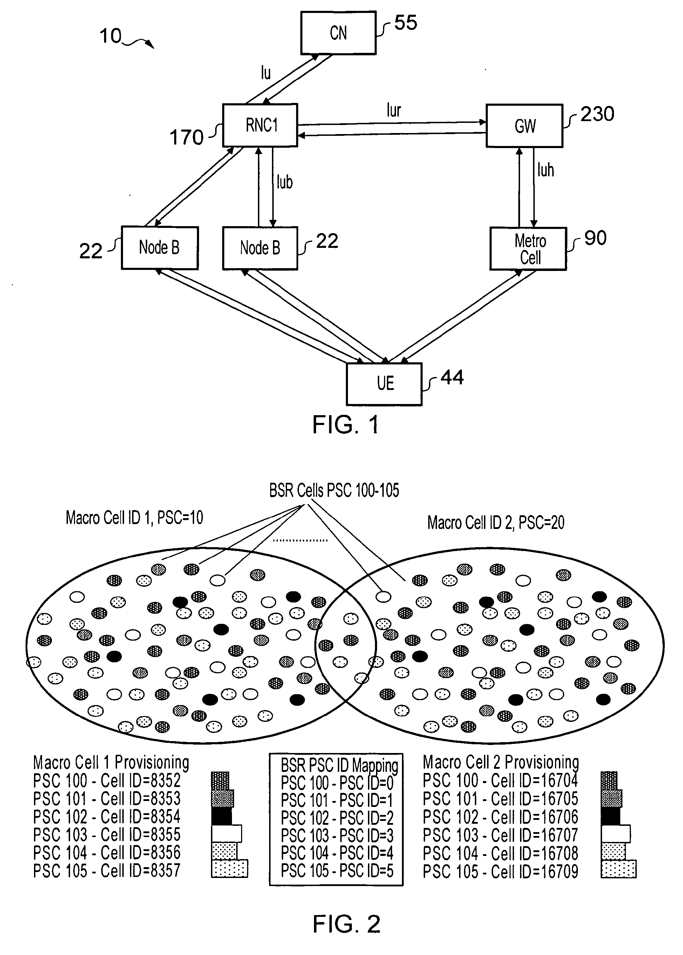

Figure 1 illustrates a wireless communication network, generally 10, according to one embodiment. User equipment 44 roam through the wireless communication network 10. Base stations 22 are provided which support respective macro cells. A number of such base stations are provided, which are distributed geographically in order to provide a wide area of coverage to the user equipment 44. When user equipment 44 is within a macro cell supported by a base station then communications may be established between the user equipment 44 and the base station over an associated radio link. Of course, it will be appreciated that Figure 1 illustrates a small subset of the total number of user equipment and base stations that may be present in a typical communications system.

The wireless communication network 10 is managed by a radio network controller 170. The radio network controller 170 controls the operation of the wireless communications network 10 by communicating with the base stations 22 over a backhaul communication link lub. The network controller 170 also communicates with the user equipment 44 via their respective radio links in order to efficiently manage the wireless communication network 10.

The radio network controller 170 maintains a neighbour list which includes information about the geographical relationship between cells supported by base stations. The radio network controller 170 is operable to route traffic via circuit-switched and packet-switched networks and to communicate with the core network 55. Hence, a mobile switching centre is provided (not shown) with which the radio network controller 170 may communicate. The mobile switching centre then communicates with a circuit-switched network such as a public switched telephone network (PSTN - not shown). Likewise, the network controller 170 communicates with serving general packet radio service support nodes (SGSNs-not shown) and a gateway general packet radio support node (GGSN-not shown). The GGSN then communicates with a packet-switch core such as, for example, the Internet.

In addition, there are provided small cell base stations such as femto cell base stations (not shown), each of which provides a femto cell in the vicinity of a building within which the associated femto cell base station is installed. The femto cells provide local communications coverage for a user in the vicinity of those buildings. Each femto cell base station communicates via a small cell controller/gateway 230. A handover event is initiated between the RNC 170 and small cell controller/gateway 230 when the user equipment 44 provides a measurement report to the macro base station which indicates that the femto base stations are within range. The femto cell base stations typically utilise a broadband Internet connection (such as ADSL, Cable, Ethernet, etc.) as a backhaul.

Femto cell base stations are lower-power, low-cost, self organising base stations that provide a high cellular quality of service in residential, enterprise or metro cell environment. In contrast to current macro cell approaches where complex and highly reliable base stations are deployed to strategic locations decided by the network owner, the femto cell base stations may be provided locally by customers for their own use, but are also a cost effective solution for operators to provide low cost capacity hotspot coverage and rural coverage. Such femto cell base stations may provide local coverage in areas of the macro network where quality of service may be low. Hence, the femto cell base stations provide for improved quality of service in areas which are difficult for network operators. To reduce the cost of the femto base stations and to reduce complexity and interference effects of the femto cell on other user equipment within the macro cell, the transmission power of the femto cell base station is relatively low in order to restrict the size of the femto cell to a range of tens of metres or less. The femto cell base stations have extensive auto-configuration and self-optimisation capability to enable a simple plug-and-play deployment. As such, they are designed to automatically integrate themselves into an existing macro cellular wireless network 10. In addition, some access point within the macro cellular network contains some functionality traditionally provided by the core network.

In addition, other small cell base stations such as a metro cell base station 90 may be provided. Such metro cell base station support a metro cell and are typically provided by network operators in areas of high traffic or poor coverage.

The number of primary scrambling codes which can be allocated to a small base station is limited. In many implementations, the number of available primary scrambling codes will be less than 20 and most typically will be between 6 and 16. However, the total number of available primary scrambling codes will vary from implementation to implementation and may be more or less than these illustrative numbers. These primary scrambling codes are auto-configured by the small cell base stations based on measurements of surrounding primary scrambling codes used. Therefore, in typical small cell base station deployments, the primary scrambling codes may need to be heavily reused which means that many small cell base stations may be using the same primary scrambling code within a macro cell coverage area.

### Overview

Before discussing embodiments in any further detail, an overview of the present technique will now be given. When deploying small cell base stations to provide small cells such as, for example, micro cells, pico cells, femto cells, home cells or metro cells within an existing network, equipment operating in accordance with legacy standards may not be able to accurately identify a small cell to enable handover to occur. This is because these legacy standards assume that each cell has no more than 32 neighbours and each neighbour must have an unambiguous primary scrambling code which maps uniquely to a neighbour cell (expressed as a cell ID). Typically, 6 primary scrambling codes are available to small cells in the whole network and these will become heavily reused by many small cells in order to provide a self-organising network. This means that an incoming RNSAP RL set up/addition request received over the lur interface from an RNC has a target cell ID which may point to many small cells.

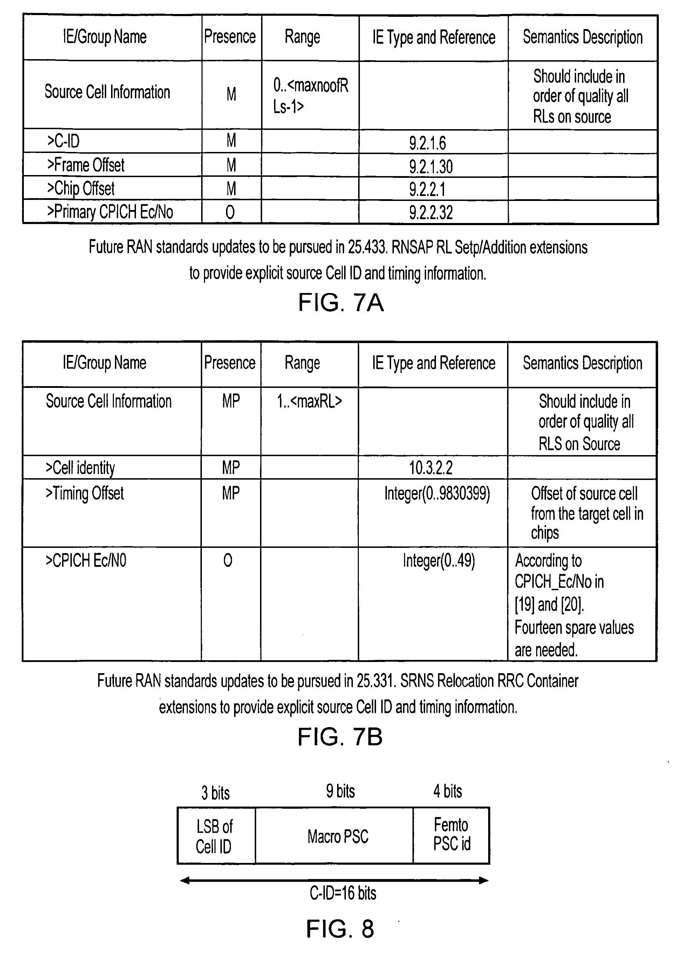

For example, as illustrated generally in Figure 2, when traditional provisioning is performed where there are 10,000 small cells under one radio network controller 170 or gateway 230 and 6 primary scrambling codes available for the small cells and there are 100 small cells per macro cell, an incoming handover request will point to 10,000/6 small cells or 1,666 candidate target cells. Even with some additional enhancements provided by proprietary equipment, such as the encoding of a source cell ID into a target cell ID as mentioned below and described in more detail in EP 2 244 503 A1 and illustrated in Figure 8, the contents of which are incorporated herein by reference, the number of candidate target cells will still be typically a minimum of 17 and may well be much more than this when the user equipment was in soft handover on the macro cell before handover occurred.

Even with parallel candidate target cell preparation, this is still a large amount of resources to prepare, particularly as it consumes valuable channel element resources of those small cells. With open access intra-frequency deployments between macro and small cells such as metro cells in public areas, reliable incoming handover (soft or hard) is essential.

This approach seeks to find a way of reducing the target cell ambiguity by using existing 3GPP R99 user equipment and R99 RAN lur (RNSAP) protocols to reduce such ambiguity without needing to provide user equipment or macro cell upgrades. Although target cell ambiguity is addressed with 3GPP REL 9 standard, this requires support from macro cells and user equipment and is not viable in public open access deployments where much legacy user equipment exists. Also, this support is optional for user equipment and is intended primarily for home NodeB identification. Therefore, this is not a viable option for intra-frequency metro cell deployment. In addition, the standards could be enhanced to provide additional and more explicit source cell and timing information (as shown in Figures 7A & 7B), however, it should be noted that requires further standardisation and implementation on vendor's UTRAN equipment which is not always practical either.

Although previous techniques have been proposed to utilise some timing information for femto cell to femto cell handover to reduce target ambiguity, this requires extensions to the standard RAN protocols. Also, although EP 2 244 503 A 1 provides an approach to encode source cell information into the target cell ID, this may still be inadequate. Furthermore, although it is possible to configure multiple candidate target cells in parallel, this becomes very costly in a dense deployment environment.

The general approach recognises that the lur RNSAP RL set up/addition messaging (specified in 3GPP TS25.423) includes information relating to a chip offset and a frame offset which provides some timing information to enable the soft handover radio link to arrive at the same time at the user equipment as any existing transmissions. This timing information has no explicit timing reference.

However, the following may be established: the source RNC set the initial radio link to the user equipment with a timing offset from SFN = 0 between 0..80ms (this is the default DPCH offset/DOFF as specified in 3GPP TS25.331 and TS25.402), which is done to spread the physical layer load on the NodeB; and all subsequent radio links must be time aligned to +/-148 chips based on user equipment measurement reports.

It is assumed that the initial radio link established by the macro cell with the user equipment 44 is not far away from the small cell (hence, the macro cell may be one that the small cell detects or one of its close neighbours). The small cells determine timing offset to neighbouring cells (such as macro cells) through user equipment measurement reports, through network listening or by calculating its own timing and the timing difference to the macro using a known timing source such as the Network Time Protocol (NTP) or global positioning system (GPS) timing information and this is registered with the small cell gateway 230.

Each deployed base station and, in particular, each small cell base station measures the SFN-SFN timing between their own cell and their neighbours, such as their macro neighbours, using any of a number of different techniques. First, the small cell base station may measure the SFN-SFN timing through network listening by the small cell base station itself. Also, the SFN-SFN timing may be measured through user equipment intra-frequency measurement reports provided to the small cell base station. The small cell base station may also calculate a timing difference from a known timing source such as NTP or GPS; for example, the time difference between the macro cell SFN = 0 and the small cell SFN = 0 may be measured from, for example, midnight UTC. In addition, the small cell base station registers the small cell primary scrambling code, the macro cell primary scrambling code and the macro cell ID with the small cell gateway 230. Typically, the SFN-SFN timing will be indicated as a number of frames and chips difference between the SFN = 0 under a modulo 256 arrangement. The small cell base stations then register their timing information with the small cell gateway 230.

The small cell gateway 230 then builds up a timing topology for each small cell using the SFN-SFN timing offset for each detected macro cell and this is associated with the macro cell ID, the macro cell primary scrambling code and the small cell primary scrambling code. Optionally, the small cell gateway may extend the topology to include timing to macro cells not detected by the small cell base station, but which are known to the small cell gateway 230. Again, this may be done in any of a number of different ways.

When the small cell gateway 230 receives the RNSAP RL set up/addition message, it finds a match of candidate target small cells by comparing the chip offset and frame offset provided in the lur RNSAP message with the timing offsets registered by small cells and those which match within the 80ms DOFF boundary are selected as candidate target cells. The candidate target small cells may be narrowed down further using the source cell ID and small cell primary scrambling code which may be encoded in the target cell ID as mentioned above.

The number of candidate target cells can be further reduced by only looking at those within the overlying source cell. The candidate target cells may be further enhanced by comparing the timing offsets with neighbouring cells to the source cell.

This will typically narrow down the search of candidate target cells to approximately 80ms/2560ms = 3.1% of the original value. Accordingly, if the small cell gateway 230 opens up the search around other neighbouring cells, such as 6 neighbouring cells, then this will result in an approximate 19% narrowing of the number of candidate target cells. In the previous example, there were 17 targets and so with this method the number of targets may be reduced down to approximately 4 targets which is a significant saving on resources, particularly if there is a high frequency of handover events as is expected with soft handover.

### Macro Neighbour Determination

As mentioned above, the small cell gateway 230 builds up a timing topology for each small cell using the SFN-SFN timing offset for each detected macro cell based on the timing offset information received. This is also typically extended to include timing to macro cells not detected by the small cell base station, but which are known to the small cell gateway 230 by looking for relationships between timing offset information received. To facilitate this process, a database of macro cell IDs and latitude/longitude information may be provided. When a large number of small cell base stations are present, the small cells on macro cell borders will report multiple macro cells and the small cell gateway 230 may then build up a neighbour relationship. From a knowledge of a timing reference and knowledge of the small cell timing, the small cell gateway 230 can then project an SFN-SFN timing offset to undetected macro cells.

Alternatively, the small cell gateway 230 can build up a macro neighbour topology based upon the registered information of the collection of small cells under its control. One small cell detecting macro cells on the same frequency indicates a neighbour relationship which can be applied to another small cell which detects only one of those macro cells.

### Macro Neighbour Timing Offset To Small Cells

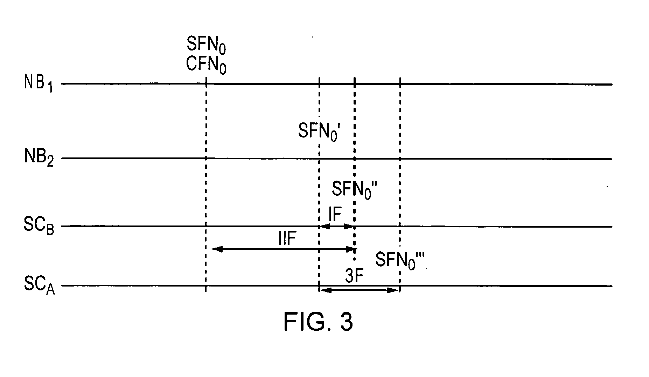

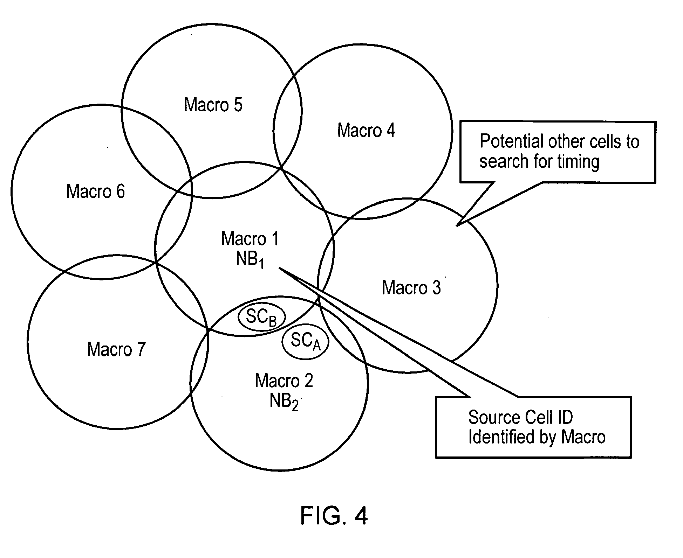

Figure 3 illustrates an example SFN-SFN timing arrangement for base stations for a subset of base stations shown in Figure 4. In this example, there are two neighbouring macro cells, NB₁ and NB₂. Within macro cell NB₂ is small cell base station SC_{A}. Within the cells NB₁ and NB₂ is the small cell SC_{B}. In this example, measurement through network listening occurs within the small cell base stations. Accordingly, the small cell base station associated with cell SC_{A} reports the presence of cell NB₂ and identifies a 3-frame SFN-SFN timing offset. The small cell base station associated with small cell SC_{B} reports a 1-frame SFN-SFN timing offset with cell NB₂ and an 11-frame SFN-SFN timing offset with cell NB₁.

The small cell gateway 230 stores this information and is able to derive that cell NB₁ neighbours cell NB₂ and that there is a 10-frame SFN-SFN timing offset between cell NB₁ and cell NB₂. Had this information been provided using measurement reports from user equipment, then the same timing offsets could be derived using knowledge of the relationship between SFN = 0 for the detected cell and CFN = 0 for the user equipment. Using measurement reports from user equipment which is not handed over to the cell within which the small cell is based would simplify establishing this timing information. In addition to the timing offsets, the small cell base station provides its primary scrambling code, the detected primary scrambling code of the detected cell and the cell ID of the detected cell. As mentioned above, this can be achieved using the technique described in EP 2 244 503 A1.

### Initiating Soft Handover

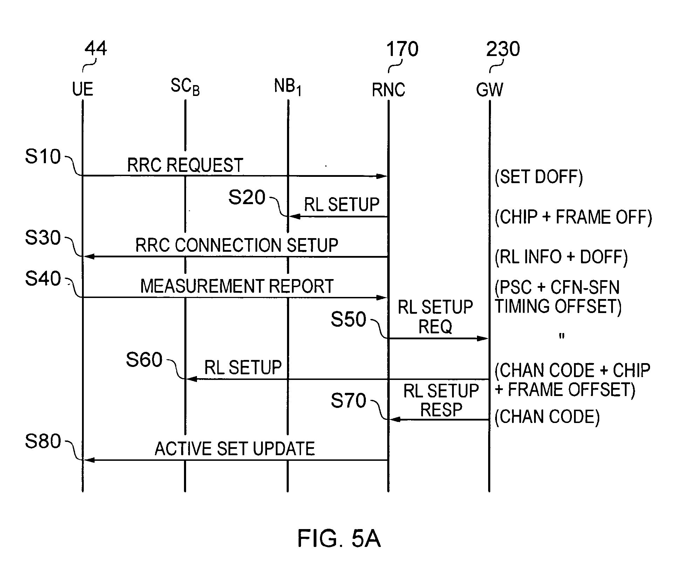

Figure 5A shows an overview of messaging between user equipment and network nodes when establishing a radio connection and then performing soft handover. In this example, the user equipment first establishes a radio connection with macro cell NB₁.

At step S10, an RRC request message is sent from the user equipment 44 to the RNC 170.

At step S20, the RNC 170 determines a DOFF, and sends an RL set-up message to the cell NB₁ with chip offset and frame offset equal to DOFF.

At step S30, the RNC 170 also sends an RRC connection set-up message which includes radio link information and DOFF to the user equipment 44. Thereafter, the user equipment is served by cell NB₁. As shown in Figure 3, DOFF = 0 in this example in order to simplify understanding and so CFN = 0 (CFN₀) for the user equipment 44 therefore aligns with SFN = 0 (SFN₀) of cell NB₁.

At step S40, the user equipment 44 detects small cell SC_{B} and transmits a measurement report. The measurement report includes a CFN-SFN timing offset which, in this example, is the difference between SFN₀ and SFN₀" of 11 frames. In addition, the measurement report includes an indication of the primary scrambling code for cell SC_{B} and may also include an indication of the PSC for cell NB₁, as well as an indication of the cell ID of cell NB₁ if the techniques described in EP 2 244 503 A1 are used.

At step S50, the RNC 170 sets up a radio link using the lur interface to the small cell gateway 230 which includes amongst other information the target Cell ID and Chip Offset/ Frame Offset equal to the CFN-SFN timing offset reported by the user equipment 44. From this information, the small cell gateway 230 is able to determine from the chip/frame offset information that there is a match in timing offset of 11 frames between cell NB₁ and SC_{B}. In fact, the small cell gateway 230 would indicate a match for any SFN-SFN timing offset which fell within a range which was bounded at its lower region by the chip/frame offset indicated by Radio Link Setup and was bounded at the upper region by the chip/frame offset plus the maximum value of DOFF. The candidate targets which fall within this range may then be reduced by excluding those which do not have the reported small cell primary scrambling code identifier and, optionally, which are not included within the macro cell identified by its primary scrambling code and an identifier of the cell ID.

At step S60, the small cell gateway 230 sends an RL setup message to small cell SC_{B} with a DL channelisation code, together with timing information indicating the frame and chip offset; in this example, 11 frames.

At step S70, the small cell gateway 230 sends an RL Setup Response message to the RNC 170 indicating the DL channelisation code.

At step S80, the RNC 170 performs an active set update with the user equipment 44 and the user equipment 44 syncs to the new small cell radio link and performs soft handover.

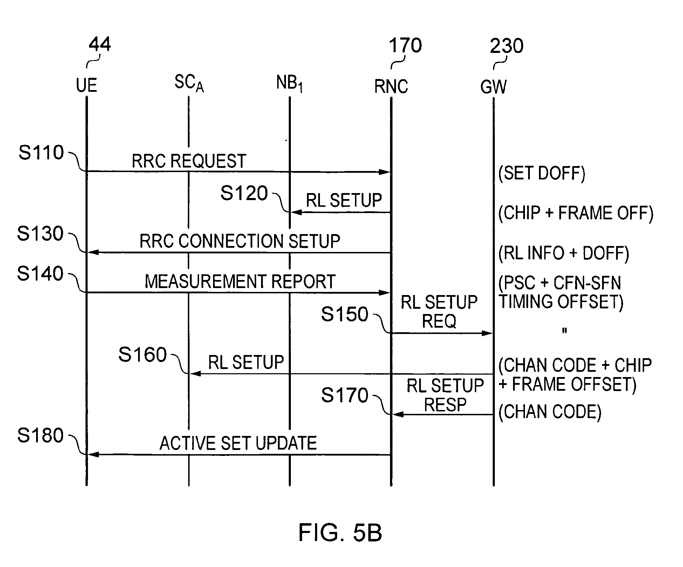

Figure 5B shows an overview of messaging between user equipment and network nodes when establishing a radio connection and then performing soft handover. In this example, the user equipment first establishes a radio connection with macro cell NB1.

At step S110, an RRC request message is sent from the user equipment 44 to the RNC 170.

At step S120, the RNC 170 determines a DOFF, and sends an RL set-up message to the cell NB₁ with chip offset and frame offset equal to DOFF.

At step S130, the RNC 170 also sends an RRC connection set-up message which includes radio link information and DOFF to the user equipment 44. Thereafter, the user equipment is served by cell NB₁. As shown in Figure 3, DOFF = 0 in this example in order to simplify understanding and so CFN = 0 (CFN₀) for the user equipment 44 therefore aligns with SFN = 0 (SFN₀) of cell NB₁.

At step S140, the user equipment 44 detects the presence of small cell SC_{A}. The UE 44 sends a measurement report which includes the primary scrambling code for small cell SC_{A} as well as the CFN-SFN timing offset detected. In this example, the CFN-SFN timing offset is the difference between CFN₀ and SFN₀''', 13 frames, as indicated in Figure 3. In addition, the measurement report includes an indication of the primary scrambling code for cell SC_{A} and may also include an indication of the PSC for cell NB₁, as well as an indication of the cell ID of cell NB₁ if the techniques described in EP 2 244 503 A1 are used.

At step S150, the RNC 170 sets up a radio link using the lur interface to the small cell gateway 230 which includes amongst other information the target Cell ID and Chip Offset/ Frame Offset equal to the CFN-SFN timing offset reported by the user equipment 44. However, none of the directly reported SFN-SFN timing offsets are as large as 13 frames. Accordingly, the small cell gateway 230 examines the neighbour relationships in order to see whether there is a SFN-SFN timing relationship between a small cell within a neighbouring macro cell which matches the reported chip/frame offset. In this example, it is identified that NB₂ is a neighbour to NB₁ and that a small cell SC_{A} within NB₂ would have a timing offset of 13 frames. This is because small cell SC_{A} has a timing offset of 3 frames with respect to cell NB₂, and cell NB₂ has a timing offset of 10 frames with respect to cell NB₁. Of course, as mentioned above, an assessment would be made for all small cells within the neighbouring macro cells which had an SFN-SFN timing offset with the source cell which fell within the range which was bounded at its lower region by the chip/frame offset indicated in the Radio Link Setup and at its upper range by the chip/frame offset plus DOFF.

At step S160, the small cell gateway 230 sends a radio link set-up message to the small cell SC_{A} which includes a DL channelization code, and the chip offset and frame offset, in this case 13 frames.

At step S170, the small cell gateway sends an RL Setup Response message to the RNC 170 which includes the DL channelization code.

At step S180, the RNC 170 sends an active set update message and the user equipment 44 syncs to the new small cell radio link provided by small cell SC_{A} and soft handover occurs.

Hence, it can be seen that upon reception of an RL set-up request/addition request, the small cell gateway 230 extracts the following information: C-ID (the target cell ID); frame offset; and chip offset.

The C-ID is optionally decomposed by the small cell gateway 230 to determine the source cell PSC ID, source cell ID LSB and small cell PSC ID, as described in EP 2 244 503 A1. The small cell gateway 230 then determines all small cells which match the corresponding small cell PSC ID and have detected a macro cell with the determined source cell PSC ID and optionally the LSB of the source cell ID. Alternatively in the case of a multi-carrier deployment, the LSB of the source cell ID could be an index into the ARFCN of the macro cell. The small cell gateway 230 may also optionally find small cells of the extended topology which detect macro cells which neighbour the macro source cell. Finally, from all of the remaining candidates targets, the small cell gateway 230 may filter the candidate targets based upon the frame offset/chip offset as follows: filter out all small cells which do not have an SFN-SFN timing relationship to the macro cell which is in the range of (chip offset + frame offset x 38400) to (chip offset + frame offset x 38400 + 307200); in other words, the provided timing plus 80ms, which is the typical value of DOFF.

### Uplink Synchronisation

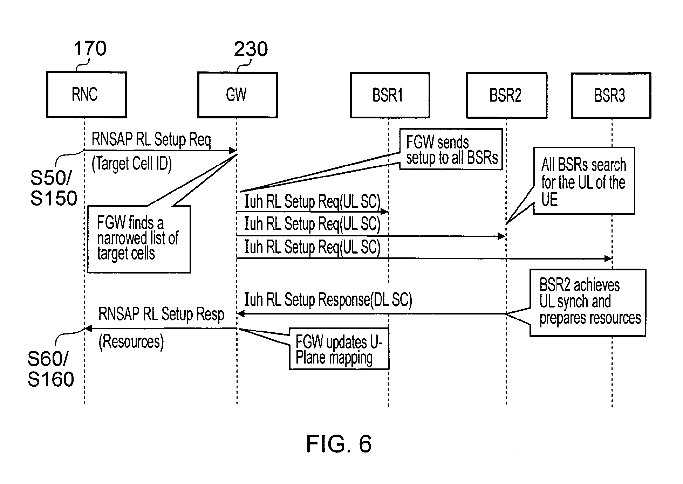

Prior to performing the RL setup and active set update, the small cell gateway 230 may first prepare the identified small cell target candidates (BSR 1-3) with the incoming request as illustrated in more detail in Figure 6. When one of the prepared small cells syncs with the uplink synchronisation channel of the user equipment 44, it responds to the small cell gateway 230 and the user call is established on this small cell in the same way as mentioned above.

Accordingly, it can be seen that a mechanism to perform handover (either soft or hard) between a macro RNC and a small cell network over a 3GPP lur interface without any upgrade to the radio access network or user equipment is provided. Such an approach requires no standards upgrade as the soft handover can be facilitated within existing standards and therefore performed by legacy equipment. Such an approach has particular utility in metro cell or open access small cell deployments.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of identifying target cells with which to initiate handover, said method comprising the steps of:
receiving timing offset information indicative of a timing offset between frames transmitted by different cells; and
in response to a message having information relating to a detected target cell, said message having a detected timing offset between frames transmitted by a source cell and frames transmitted by said detected target cell, identifying as candidate target cells with which to initiate handover any cells having a timing offset indicated by said timing offset information which is within a range bounded by said detected timing offset.

2. The method of claim 1, wherein said range is also bounded by said detected timing offset in combination with a default timing offset.

3. The method of claim 1 or 2, wherein said step of identifying comprises identifying as candidate target cells any cells indicated by said timing offset information as having a timing offset which is greater than or equal to said detected timing offset, but equal to or less than said detected timing offset in addition to said default timing offset.

4. The method of any preceding claim, wherein said step of identifying comprises identifying as candidate target cells any cells having a timing offset indicated by said timing offset information which matches said detected timing offset.

5. The method of any preceding claim, wherein said timing offset information comprises cell identifiers associated with each timing offset, said message includes a detected target cell identifier and said method comprises the step of disregarding any candidate target cells not sharing said detected target cell identifier.

6. The method of claim 5, wherein said detected target cell identifier comprises an indication of a primary scrambling code of said target cell.

7. The method of any preceding claim, wherein said timing offset information comprises cell identifiers associated with each timing offset, said message includes an indication of said source cell and said step of identifying comprises utilising timing offset information indicated as being associated with said source cell.

8. The method of claim 7, wherein said source cell identifier comprises at least one of an indication of a primary scrambling code of said source cell and an indication of a cell identifier of said source cell.

9. The method of any preceding claim, comprising the steps of maintaining a neighbour list identifying neighbouring cells to each source cell and said step of identifying comprises utilising timing offset information indicated as being associated with said source cell and its neighbouring cells.

10. The method of claim 9, wherein said step of disregarding comprises disregarding any candidate target cells whose timing offset when combined with a timing offset associated with said source cell fails to fall within said range bounded by said detected timing offset.

11. The method of claim 9, wherein said step of disregarding comprises disregarding any candidate target cells whose timing offset when combined with a timing offset associated with said source cell and said neighbouring cell fails to fall within said range bounded by said detected timing offset.

12. The method of any preceding claim, comprising the step of configuring said candidate target cells to attempt uplink synchronisation with user equipment associated with said message and disregarding any candidate target cells unable to establish said uplink synchronisation.

13. A computer program product operable, when executed on a computer, to perform the method steps of any preceding claim.

14. A network node operable to identify target cells with which to initiate handover, said network node comprising:
timing logic operable to receive timing offset information indicative of a timing offset between frames transmitted by different cells; and
identification logic operable, in response to a message having information relating to a detected target cell, said message having a detected timing offset between frames transmitted by a source cell and frames transmitted by said detected target cell, to identify as candidate target cells with which to initiate handover any cells. having a timing offset indicated by said timing offset information which is within a range bounded by said detected timing offset.
